# EUROPEAN PATENT APPLICATION

(11) **EP 4 782 973 A1**
(43) Date of publication of application: **29.07.2026**
(21) Application number: 24867594.4
(22) Date of filing: 23.09.2024
(51) Int. Cl.: G06F 3/0481

(54) **INTERFACE DISPLAY METHOD AND APPARATUS, AND ELECTRONIC DEVICE AND READABLE STORAGE MEDIUM**

(30) Priority: 22.09.2023 CN 202311236192
(71) Applicant: Beijing Zitiao Network Technology Co., Ltd., Beijing 100190 (CN)
(72) Inventor: HE, Zhimiao, Beijing 100028 (CN); LI, Chengyi, Beijing 100028 (CN); LIANG, Yuying, Beijing 100028 (CN); ZHANG, Jingyuan, Beijing 100028 (CN)
(74) Representative: Marks & Clerk LLP
(86) International application number: PCT/CN2024/120253
(87) International publication number: WO 2025/061189

(57) **Abstract**

Provided in the embodiments of the present disclosure are an interface display method and apparatus, and an electronic device and a readable storage medium. The interface display method comprises: receiving a first input for a target display interface; in response to the first input, updating and displaying displayed content in the target display interface by means of a first update mode; in response to the displayed content in the target display interface meeting a first preset condition, receiving a second input for the target display interface; and in response to the second input, updating and displaying the displayed content in the target display interface by means of a second update mode.

## Description

The present application claims priority of Chinese Patent Publication No. 202311236192.1, filed on September 22, 2023, which is incorporated herein by reference in its entirety as a part of the present application.

### TECHNICAL FIELD

Embodiments of the present disclosure relate to an interface display method and apparatus, an electronic device, and a readable storage medium.

### BACKGROUND

With the development of electronic communication technology, when browsing content information in various Internet platforms, a user needs to perform corresponding operation interaction with an electronic device to cause the electronic device to update display content. In the related art, a manner of triggering the update of the display content is relatively monotonous.

### SUMMARY

At least one embodiment of the present disclosure provides an interface display method and apparatus, an electronic device, and a readable storage medium.

In a first aspect, an embodiment of the present disclosure provides an interface display method, including: receiving a first input via a target display interface; updating and displaying display content in the target display interface in a first update manner in response to the first input; receiving a second input via the target display interface in response to the display content in the target display interface satisfying a first preset condition; and updating and displaying the display content in the target display interface in a second update manner in response to the second input.

In a second aspect, an embodiment of the present disclosure further provides an interface display apparatus, including: a receiving module, configured to receive a first input via a target display interface; and a display module, configured to update and display, in response to the first input, display content in the target display interface in a first update manner; where the receiving module is further configured to receive a second input via the target display interface in response to the display content in the target display interface satisfying a first preset condition; and where the display module is further configured to update and display, in response to the second input, the display content in the target display interface in a second update manner.

In a third aspect, an embodiment of the present disclosure further provides an electronic device, including a processor and a memory, the memory is configured to store a program or an instruction executable on the processor, and the program or instruction, upon executed by the processor, causes the processor to implement the steps of the interface display method according to the first aspect.

In a fourth aspect, an embodiment of the present disclosure further provides a readable storage medium, the readable storage medium stores a program or an instruction, and the program or instruction, upon executed by a processor, causes the processor to implement the steps of the interface display method according to the first aspect.

In a fifth aspect, an embodiment of the present disclosure further provides a chip, the chip includes a processor and a communication interface, the communication interface is coupled with the processor, and the processor is configured to run a program or an instruction to implement the steps of the interface display method according to the first aspect.

In a sixth aspect, an embodiment of the present disclosure further provides a computer program product, the program product is stored in a storage medium, and the program product is executable by at least one processor to implement the steps of the interface display method according to the first aspect.

### BRIEF DESCRIPTION OF DRAWINGS

Fig. 1 shows a schematic flowchart of an interface display method provided by an embodiment of the present disclosure;
Fig. 2 shows a first schematic diagram of a display interface of an interface display method provided by some embodiments of the present disclosure;
Fig. 3 shows a second schematic diagram of a display interface of an interface display method provided by some embodiments of the present disclosure;
Fig. 4 shows a third schematic diagram of a display interface of an interface display method provided by some embodiments of the present disclosure;
Fig. 5 shows a fourth schematic diagram of a display interface of an interface display method provided by some embodiments of the present disclosure;
Fig. 6 shows a fifth schematic diagram of a display interface of an interface display method provided by some embodiments of the present disclosure;
Fig. 7 shows a sixth schematic diagram of a display interface of an interface display method provided by some embodiments of the present disclosure;
Fig. 8 shows a seventh schematic diagram of a display interface of an interface display method provided by some embodiments of the present disclosure;
Fig. 9 shows a structural block diagram of an interface display apparatus provided by some embodiments of the present disclosure;
Fig. 10 shows a structural block diagram of an electronic device according to an embodiment of the present disclosure; and
Fig. 11 is a schematic structural diagram of hardware of an electronic device for implementing an embodiment of the present disclosure.

### DETAILED DESCRIPTION

The technical solutions in the embodiments of the present disclosure will be described clearly below with reference to the drawings in the embodiments of the present disclosure. Obviously, the described embodiments are part of the embodiments of the present disclosure, but not all of the embodiments. Based on the embodiments described in the present disclosure, all other embodiments obtained by those of ordinary skill in the art without creative effort belong to the scope of protection of the present disclosure.

The terms "first" and "second" in the description and claims of the present disclosure are used to distinguish similar objects, but are not used to describe a specific order or sequence. It should be understood that the terms used in this way are interchangeable under appropriate circumstances, so that the embodiments of the present disclosure can be implemented in an order other than those illustrated or described herein, and the objects distinguished by "first", "second", etc. are usually of the same type, and the number of the objects is not limited, for example, the number of the first object may be one or more. In addition, "and/or" in the specification and claims means at least one of the connected objects, and the character "/" generally means that the associated objects before and after are in an "or" relationship.

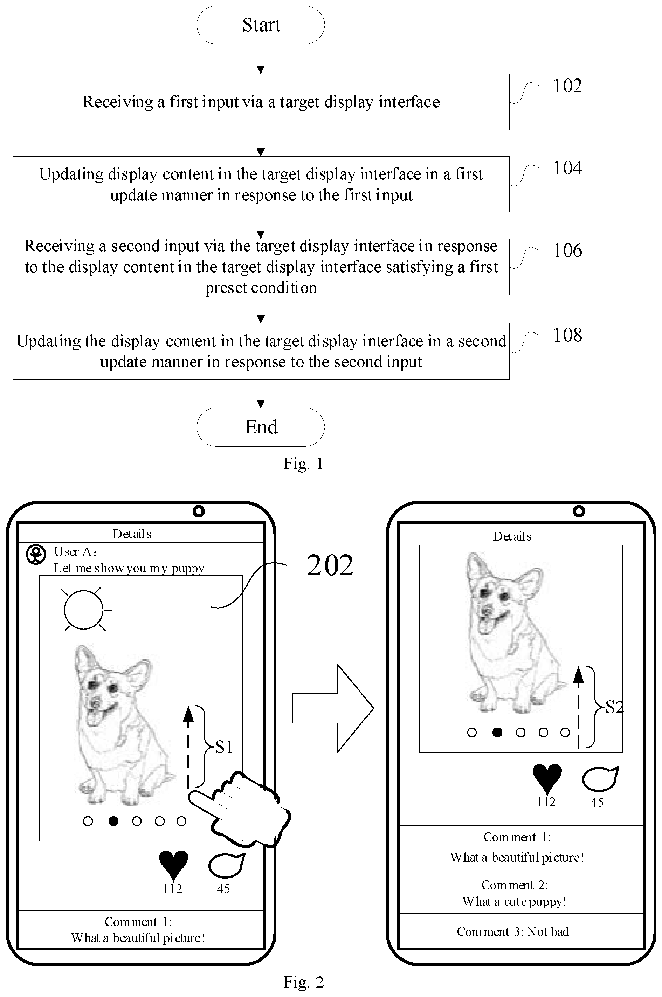

The interface display method, the interface display apparatus, the electronic device, and the readable storage medium provided by the embodiments of the present disclosure will be described in detail below in conjunction with Figs. 1 to 11 through several exemplary embodiments and application scenarios thereof.

An embodiment of the present disclosure provides an interface display method, and Fig. 1 shows a schematic flowchart of the interface display method provided by the embodiment of the present disclosure. As shown in Fig. 1, the interface display method may include the following steps S102-S108.

Step 102, receiving a first input via a target display interface.

Exemplarily, the target display interface may include a display interface when an electronic device runs an application, and the display content in the target display interface includes the content in the running application.

Step 104, updating and displaying display content in the target display interface in a first update manner in response to the first input.

In the embodiment of the present disclosure, the first input is used to trigger the display content in the target display interface to be updated in the first update manner. Exemplarily, the first input may be a sliding input, and the user performs the sliding input on the target display interface to update the display content in the target display interface.

Step 106, receiving a second input via the target display interface in response to the display content in the target display interface satisfying a first preset condition.

Step 108, updating and displaying the display content in the target display interface in a second update manner in response to the second input.

In the embodiment of the present disclosure, the second input is used to trigger the display content in the target display interface to be updated in the second update manner when the display content in the target display interface satisfies the first preset condition. The update manner of the display content in the target display interface is associated with the display content, for example, in the case that the display content in the target display interface does not satisfy the first preset condition, the user triggers the first input, which can control the display content in the target display interface to be updated in the first update manner; and in the case that the display content in the target display interface satisfies the first preset condition, the user triggers the second input, which can control the display content in the target display interface to be updated in the second update manner.

It should be noted that, the first input and the second input may be the same triggering manner, e.g., touch gesture operations such as sliding input, dragging input, clicking input, press-and-hold input, etc., and it may also be voice input, or gesture operations recognized by an image sensor, which is not specifically limited herein.

Exemplarily, the first preset condition may include: a content category of the display content in the target display interface has changed, that is, when the content category of the display content in the target display interface has changed, it is determined that the display content in the target display interface satisfies the first preset condition.

Exemplarily, the first preset condition may further include: a display position of the display content in the target display interface reaches a preset position, for example, after setting a preset sliding distance, when it is determined that the display content in the target display interface satisfies the first preset condition, the update manner is switched; or after setting a preset number of pieces of preset content or a preset number of content elements to be slid, when it is determined that the display content in the target display interface satisfies the first preset condition, the update manner is switched. In the embodiment of the present disclosure, before and after the display content displayed in the target display interface satisfies the first preset condition, the display content in the target display interface can be updated in different update manners, so that the interaction manner and the interface update manner when the user browses are more matched with the display content in the target display interface, and the interaction efficiency of the user on the content of the display interface and the display effect are improved.

Exemplarily, the first update manner and the second update manner are different update manners, where the first update manner and the second update manner may include manners such as updating with a gesture, and updating based on a gesture and current display content, which is not specifically limited herein. Exemplarily, the user triggers to switch to a content detail display page of target content in a recommendation stream of a homepage of an application, content details including an image, a video, or text of the target content are displayed in the content detail display page of the display content, and a related recommendation content stream is displayed after the content details. Accordingly, when the content details are displayed on the content detail display page, the information of the content details may be gradually updated with a gesture, and when the related recommendations are displayed on the content detail display page, the current recommended content may be directly switched to the next recommended content by each swipe operation.

Fig. 2 shows a first schematic diagram of a display interface of an interface display method provided by some embodiments of the present disclosure. As shown in Fig. 2, when graphic and text detail information 202 is displayed on a target display interface, a user swipes up on the target display interface to cause display content in the graphic and text detail information 202 to be updated by sliding, and a sliding update distance S1 matches a distance S2 of the user swiping up, so that the display content in the target display interface can be updated and displayed with the gesture operation of the user.

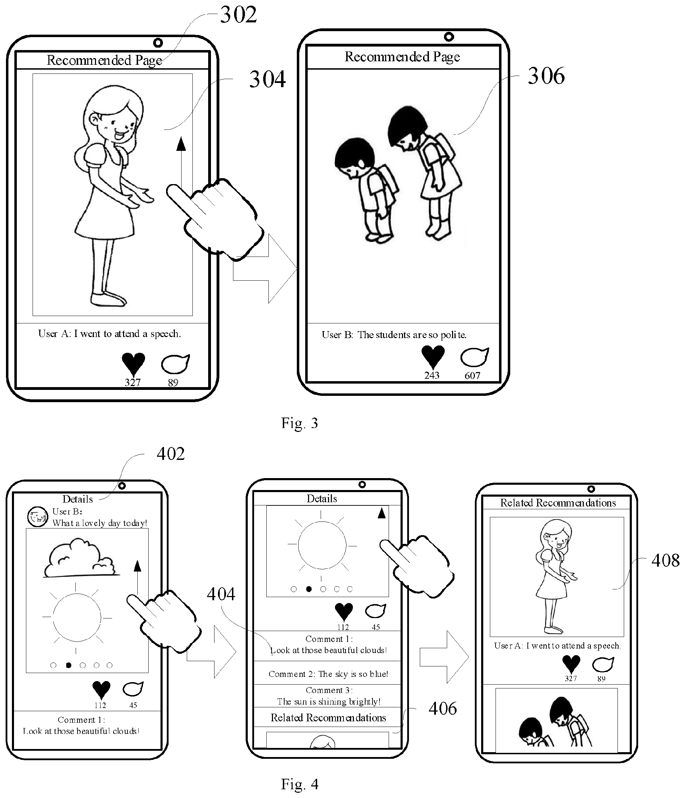

Fig. 3 shows a second schematic diagram of a display interface of an interface display method provided by some embodiments of the present disclosure. As shown in Fig. 3, when a recommendation information flow 302 is displayed on a target display interface, where the recommendation information flow may include a plurality of pieces of recommendation content, a user swipes up on the target display interface, and after an operation input of the user swiping up is acquired, currently displayed recommendation information content 304 is updated and replaced with next piece of recommendation information content 306, so that the display content in the target display interface can be updated and displayed according to the gesture operation of the user and the current display content.

In the embodiment of the present disclosure, in the case that the display content in the target display interface does not satisfy the first preset condition, the user can trigger, through the first input, the display content in the target display interface to be updated and displayed in the first update manner; and in the case that the display content in the target display interface satisfies the first preset condition, the user can trigger, through the second input, the display content in the target display interface to be updated and displayed in the second update manner. In the case that the display content of the same target display interface is different, the update and display can be performed according to different update manners, thus improving the display effect and interaction efficiency when the user browses different display content.

In some embodiments of the present disclosure, receiving the second input via the target display interface in response to the display content in the target display interface satisfying the first preset condition includes:
receiving the second input via the target display interface in a case that first preset content in the target display interface is updated in the first update manner to display a first content element;
updating and displaying the display content in the target display interface in the second update manner in response to the second input includes:
updating and displaying second preset content in the second update manner in response to the second input in a case that the second preset content is displayed in the target display interface.

In the embodiment of the present disclosure, in the case that the first preset content is displayed in the target display interface, the target display interface is updated and displayed in the first update manner in response to the first input of the user. When the first preset content is updated to the first content element in the first update manner, it is determined that the target display content satisfies the first preset condition. At this time, the target display interface starts to display the second preset content, and the user performs the second input, which can trigger the update and display of the second preset content in the second update manner.

It should be noted that, the first update manner is to update the first preset content to the first content element and display the first content element, where the first content element may be a content element in the first preset content; and when the first preset content is updated to display the first content element, the target display interface starts to display the second preset content, and updates the second preset content in the second update manner in response to the second input. The first content element may also be a content element in the second preset content.

Exemplarily, the first content element may be specific content in the first preset content, such as a certain image feature, certain text information, and the like.

Exemplarily, the first content element may be content at a certain position in the first preset content, such as content at the top of a page of the first preset content, content at the bottom of the page of the first preset content, content on the left side of the page of the first preset content, and the like.

Fig. 4 shows a third schematic diagram of a display interface of an interface display method provided by some embodiments of the present disclosure. As shown in Fig. 4, when detail information 402 is displayed on a target display interface, a user performs a first sliding input on the target display interface, and display content in the detail information 402 is updated and displayed with the sliding input of the user, and when comment content 404 in the detail information 402 is displayed in the display interface, the target display interface starts to display a related recommendation information flow 406. At this time, the user performs a second sliding input on the target display interface, and a content card 408 in the related recommendation information flow 406 is displayed at the top. The first sliding input is the first input in the above embodiment, the second sliding input is the second input in the above embodiment, the detail information 402 is the first preset content, the comment content 404 is the first content element, the related recommendation information flow 406 is the second preset content, a display manner of updating and displaying with the sliding input of the user is the first update manner, and switching different content cards in the related recommendation page in response to the second sliding input is the second update manner.

In the embodiment of the present disclosure, the target display interface is updated in the first update manner when displaying the first preset content, satisfies the first preset condition when updated to the first content element in the first preset content, and is updated in the second update manner when the target display interface displays the second preset content, so that the update manner can be automatically switched when the display content in the target display interface changes, thus allowing the user to browse different display content by different interaction manners.

In the embodiment of the present disclosure, the first preset content includes creation content and interaction detail information. Exemplarily, the first preset content may be graphic and text detail information, the creation content includes but is not limited to graphic and text creation, video, text creation, etc., and the interaction detail information includes but is not limited to like information, comment information, etc. In the embodiment of the present disclosure, the first content element is a content element in the first preset content, and the first content element includes an element at a preset position of any of the creation content and the interaction detail information.

Exemplarily, the first content element may be a picture displayed at the top in the graphic and text details, and may also be comment information displayed at the bottom of a comment column in the comment information.

In the embodiment of the present disclosure, the first preset content including the creation content and the interaction detail information is updated in the first update manner, which can improve the browsing depth of the user to the creation content and the interaction detail information; and when the first preset content is updated to the first content element in the first update manner, the update manner is switched to update the display content in the second update manner, thus improving the fluency and accuracy of the switching process.

In some embodiments of the present disclosure, updating the display content in the target display interface in the first update manner in response to the first input includes: updating the display content in the target display interface based on an input parameter of the first input in response to the first input.

In the embodiment of the present disclosure, when the display content in the target display interface is updated in the first update manner, the input parameter of the first input performed by the user on the target display interface is acquired, and the display content in the target display interface is updated based on the input parameter.

Exemplarily, in the case that the first input is a sliding input, the input parameter of the first input includes a sliding distance, a sliding trajectory, a sliding speed, etc. Updating the display content in the target display interface based on the input parameter of the first input may include, for example: when the user triggers the first input on the target display interface, the display content in the target display interface is updated by scrolling, a scrolling speed of the display content matches the sliding speed of the first input, a scrolling direction matches an input direction of the first input, and a scrolling distance matches the sliding distance of the first input.

In the embodiment of the present disclosure, in the process of updating the display content in the target display interface in the first update manner, the display content is updated and displayed based on the input parameter of the first input, so that the user can flexibly control the current display content of the target display interface, and it is convenient for the user to browse the display content in the target display interface in detail.

In some embodiments of the present disclosure, updating and displaying the display content in the target display interface in the second update manner in response to the second input includes:
in response to the second input, updating a first content card in the target display interface to a second content card and displaying the second content card in response to the display content in the target display interface satisfying a second preset condition;
where a second content element in the second content card is displayed in a first display region of the target display interface.

In the embodiment of the present disclosure, in the case that the display content in the target display interface is a content card, the electronic device may determine whether the display content displayed in the target display interface satisfies the second preset condition, and in the case that the second preset condition is satisfied, the content card currently displayed on the target display interface is switched to the next content card.

It should be noted that, the content card is display content corresponding to one display slot in the target display interface, and each content card corresponds to one media slot in a media information flow (feed flow) received by the electronic device from the server. For example, the first content card and the second content card are adjacent content cards, that is, the first content card and the second content card are adjacent in the media information flow, so they are also adjacent when the first content card and the second content card are displayed on the target display interface.

In the embodiment of the present disclosure, the first display region is a preset display region in the target display interface, and when switching from the first content card to display the second content card, the second content element in the second content card is displayed in the first display region, that is, when switching the content card displayed on the target display interface, the new content card always displays the second content element in the first display region, so that the new content card is updated and displayed in the target display interface in a similar form. The second content element is a content element in the second content card, and the second content element is a content element in the second content card that matches preset position information.

Exemplarily, the first display region is a top region of the target display interface, and the second content element is a content element displayed in a top region of the second content card, that is, when switching to display the second content card, the second content card is pinned at the top of the target display interface.

Exemplarily, the first display region is a bottom region of the target display interface, and the second content element is a content element displayed in a bottom region of the second content card, that is, when switching to display the second content card, the second content card is pinned at the bottom of the target display interface.

In the embodiment of the present disclosure, the second preset condition is a condition satisfied by the display content in the target display interface, such as: a display position of the first content card satisfies a corresponding condition, a display position of the second content card satisfies a corresponding condition, a content element in the first content card or the second content card satisfies a corresponding condition, etc.

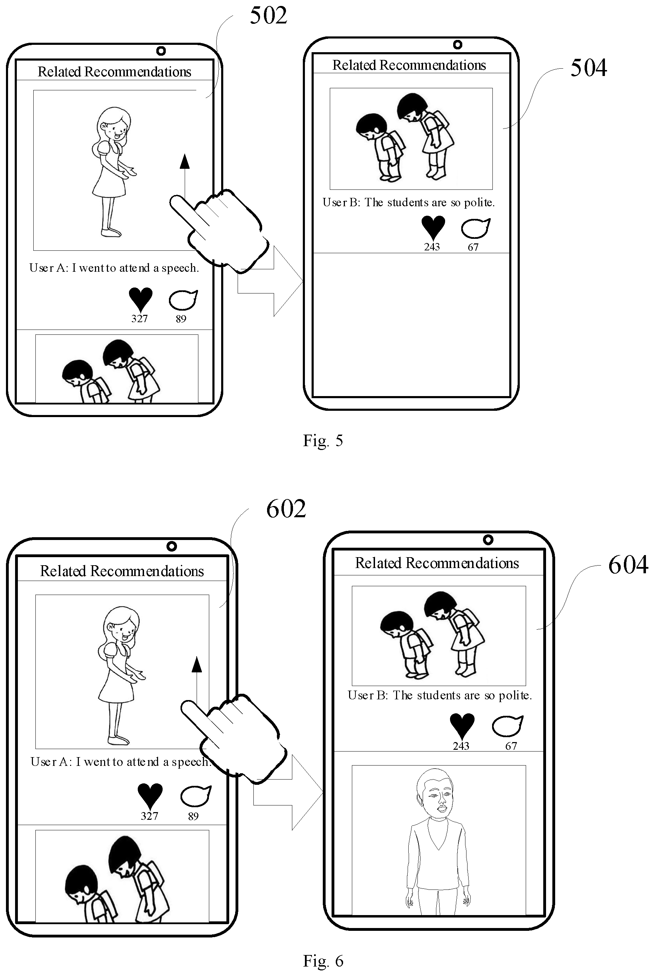

Fig. 5 shows a fourth schematic diagram of a display interface of an interface display method provided by some embodiments of the present disclosure. As shown in Fig. 5, in the case that a first content card 502 is displayed on a target display interface, when an input of a user swiping up on the target display interface is received, a top edge of a second content card 504 is displayed in a top region of the target display interface. The input of the user swiping up on the target display interface is a second input, the top edge of the second content card 504 is a second content element, and the top region of the target display interface is a first display region.

In the embodiment of the present disclosure, when switching from the first content card to the second content card in the second update manner in the target display interface, if it is detected that the display content in the target display interface satisfies the second preset condition, the first content card is switched to the second content card, and the second content element in the second content card that is switched and displayed is displayed in the specified first display region, so that when the display content of the display interface is updated in the second update manner, the second content card newly displayed in the target display interface can be pinned at the specified position, thus facilitating the user to quickly switch the content card to be viewed, and facilitating the positioning of the new content card each time the content card is switched.

In the embodiment of the present disclosure, the first preset content may be graphic and text details, and the second preset content may be related recommendations. The first update manner corresponding to the first preset content can enable the first preset content to be updated and displayed with the first input of the user, and since the graphic and text detail part requires the user to browse step by step, the image details are updated and displayed in the first update manner. The second update manner corresponding to the second preset content can update one of the content cards of the second preset content in the case that the user triggers the second input once, so that the user can trigger in a manner of one card per slide, thus improving the interaction efficiency of the user for selecting the content of interest in the related recommendations.

In some embodiments of the present disclosure, the second preset condition includes: at least part of content elements of the second content card are displayed in the target display interface;
updating the first content card in the target display interface to the second content card and displaying the second content card in response to the display content in the target display interface satisfying the second preset condition and in response to the second input includes:
in a case that all content elements of the first content card and at least part of content elements of the second content card are displayed in the target display interface, displaying the second content card in the target display interface and displaying the second content element in the first display region in response to the second input.

In the embodiment of the present disclosure, in the case that at least part of content elements of the second content card are displayed in the target display interface, it is determined that the display content in the target display interface satisfies the second preset condition.

In the embodiment of the present disclosure, in the case that the complete first content card and at least part of the second content card are displayed in the target display interface, in response to the second input of the user, the target display interface directly jumps and switches to display the second content card, where the second content element in the second content card is pinned in the first display region, so that the second content card is pinned in the specified region of the target display interface.

It should be noted that, when all content elements of the first content card are displayed in the target display interface, that is, the size of the first content card is smaller than that of the target display interface, the user may browse all content of the first content card completely without triggering to update the first content card, so the user may trigger to pin and display the second content card at a specified position of the target display interface through the second input, where the specified position is the position of the second content card when the second content element is displayed in the first display region.

Fig. 6 shows a fifth schematic diagram of a display interface of an interface display method provided by some embodiments of the present disclosure. As shown in Fig. 6, when a complete first content card 602 and a top part of a second content card 604 are displayed in a target display interface, an input of a user swiping up on the target display interface is received, a top edge of the second content card 604 is displayed in a top region of the target display interface, that is, the second content card 604 is pinned at the top. The input of the user swiping up on the target display interface is a second input, the top edge of the second content card 604 is a second content element, and the top region of the target display interface is a first display region.

In the embodiment of the present disclosure, in the case that the first content card may be completely displayed in the target display interface, the second content card adjacent to the first content card is displayed in the target display interface together. When the complete first content card and part of the second content card are displayed on the target display interface, the second input of the user is received, and the second content card is directly pinned at the specified position, thus facilitating the user to quickly view the content in the second content card.

In some embodiments of the present disclosure, the second preset condition includes: at least part of content elements of the second content card are displayed in the target display interface;
updating the first content card in the target display interface to the second content card and displaying the second content card in response to the display content in the target display interface satisfying the second preset condition and in response to the second input includes:
in a case that part of content elements of the first content card are displayed in the target display interface, updating the content elements of the first content card displayed in the target display interface in response to the second input;
in a case that remaining part of content elements of the first content card and at least part of content elements of the second content card are displayed in the target display interface, displaying the second content card in the target display interface and displaying the second content element in the first display region.

In the embodiment of the present disclosure, in the case that at least part of content elements of the second content card are displayed in the target display interface, it is determined that the display content in the target display interface satisfies the second preset condition.

In the embodiment of the present disclosure, in the case that part of content elements of the first content card are displayed in the target display interface, the user triggers the second input, and the first content card needs to be updated and displayed completely first, that is, all content elements in the first content card are updated and displayed in the target display interface. After the update and display of the first content card is completed, part of the second content card is updated and displayed in the target display interface, at this time, the second content element in the second content card is pinned in the first display region, so that the second content card is pinned in the specified region.

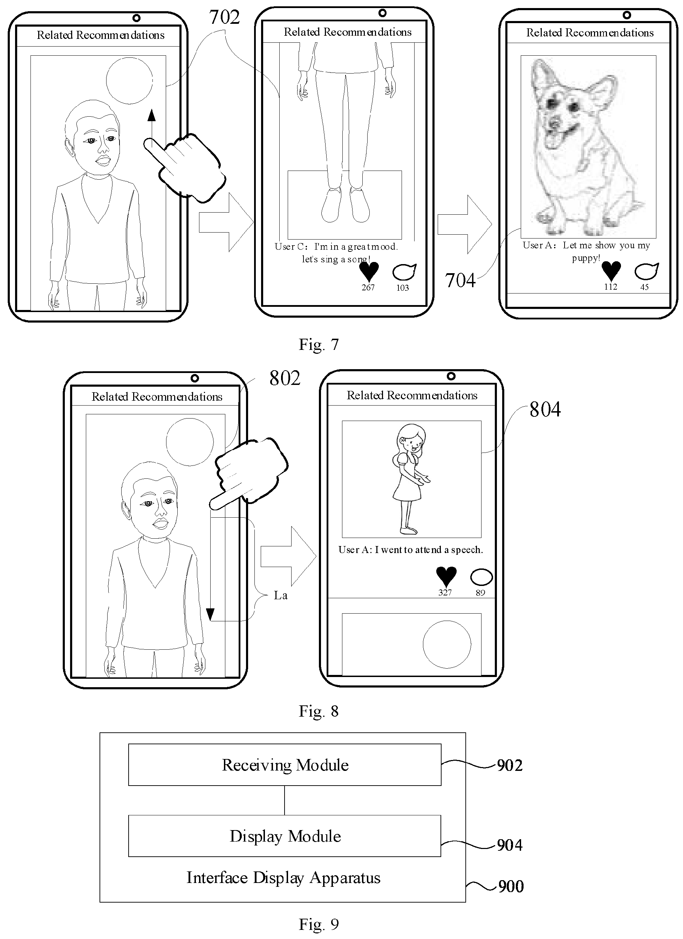

Fig. 7 shows a sixth schematic diagram of a display interface of an interface display method provided by some embodiments of the present disclosure. As shown in Fig. 7, when part of a first content card 702 is displayed on a target display interface, an input of a user swiping up on the target display interface is received, the first content card 702 continuously scrolls up, and after the first content card 702 is completely finished scrolling and no longer displayed, a top of a second content card 704 is pinned at the top of the target display interface, that is, the second content card 704 is displayed at the top. The input of the user swiping up on the target display interface is a second input, a top edge of the second content card 704 is a second content element, and a top region of the target display interface is a first display region.

Exemplarily, in a process of the user performing the second input, if a height of a part of the second content card displayed in the target display interface exceeds a first height value, the second content element of the second content card is pinned in the first display region, so as to pin the second content card in the target display interface. If the height of the part of the second content card displayed in the target display interface is less than or equal to the first height value, both the second content card and the first content card keep their current display positions, so that the user can browse part of the first content card and part of the second content card on the same screen.

In the embodiment of the present disclosure, in the case that the first content card cannot be completely displayed in the target display interface, the first content card is updated and displayed in the target display interface in response to the second input of the user, and after the update and display of the first content card is completed and at least part of the second content card is displayed in the target display interface, the second content element in the second content card is automatically pinned in the first display region, so that the second content card is pinned in the specified region, and the target display interface can flexibly respond to the second input of the user to update and display the display content in the target display interface, thus ensuring that the user can switch to the next content card after browsing the current content card completely.

In some embodiments of the present disclosure, the second preset condition includes: a moving distance of the first content card is greater than a first distance threshold.

In the embodiment of the present disclosure, the second preset condition includes: the moving distance of the first content card in the target display interface is greater than the first distance threshold, that is, the user triggers the update and display of the first content card through the second input, and when the moving distance of the first content card exceeds the first distance threshold, the second content element in the second content card is pinned in the first display region, so that the second content card is pinned in the specified region of the target display interface.

Exemplarily, the moving distance of the first content card matches an input distance of the second input, and the electronic device determines the moving distance of the first content card by acquiring the input distance of the second input. That is, the electronic device determines that the input distance of the second input is greater than an input distance threshold, and directly pins the second content card in an execution region of the target display interface. For example, a value range of the input distance threshold is 200 pt to 500 pt.

Exemplarily, the electronic device determines the moving distance of the first content card by reading a display position of the first content card.

In some embodiments of the present disclosure, updating the first content card in the target display interface to the second content card and displaying the second content card in response to the display content in the target display interface satisfying the second preset condition and in response to the second input includes:
in a case that at least part of the first content card is displayed in the target display interface, moving at least part of the first content card in a first direction in response to the second input;
in a case that the moving distance of the first content card is greater than the first distance threshold, displaying the second content card in the target display interface and displaying the second content element in the first display region.

In the embodiment of the present disclosure, when at least part of the first content card is displayed in the target display interface, the second input of the user is received, and in response to the second input, the first content card is controlled to move in the first direction, where the first direction matches the input direction of the second input. In the case where it is detected that the moving distance of the first content card in the first direction is greater than the first distance threshold, the second content element in the second content card is pinned and displayed in the first display region, so that the second content card is pinned in the specified region of the target display interface.

Fig. 8 shows a seventh schematic diagram of a display interface of an interface display method provided by some embodiments of the present disclosure. As shown in Fig. 8, when part of a first content card 802 is displayed on a target display interface, an input of a user swiping down on the target display interface is received; since an input distance of the swipe input matches a moving distance of the first content card 802, in the case that the input distance La is greater than a first distance threshold, a top of a second content card 804 is pinned at the top of the target display interface, that is, the second content card 804 is pinned at the top. The input of the user swiping down on the target display interface is a second input, a second content element is at a top edge of the second content card 804, and a top region of the target display interface is a first display region.

In the embodiment of the present disclosure, whether the display content in the target display interface satisfies the second preset condition is determined according to the moving distance of the first content card in the target display interface, and when the moving distance is greater than the first distance threshold, the second content element in the second content card is displayed in the first display region, so that the second content card is pinned in the target display interface.

In some embodiments of the present disclosure, the first distance threshold is associated with a list size of a content card list; and/or, the first distance threshold is associated with a card size of the second content card.

In the embodiment of the present disclosure, the first distance threshold may be a distance threshold determined according to a list size of a content card list, may also be a distance threshold determined according to a card size of the second content card to be switched, and may also be a distance threshold determined according to the list size of the content card list and the card size of the second content card to be switched.

Exemplarily, when a card height of the second content card is greater than a list height of the card list, the first distance threshold is determined according to a size of the card list, for example, a value range of the first distance threshold is 40% to 60% of a height value of the card list.

Exemplarily, when the card height of the second content card is less than or equal to the list height of the card list, the first distance threshold is determined according to the card size of the second content card, for example, the value range of the first distance threshold is 40% to 60% of a height value of the second content card.

In the embodiment of the present disclosure, the first distance threshold is set according to the list size of the card list and/or the card size of the second content card, which may ensure the flexibility of automatically updating and displaying the second content card.

In some embodiments of the present disclosure, the list size matches an interface size of the target display interface.

In the embodiment of the present disclosure, in the case that the display content card in the target display interface is updated, a card list of content cards is displayed in the target display interface, that is, the card list is completely displayed in the target display interface.

Exemplarily, the list size of the card list is the same as the interface size of the display interface.

Exemplarily, the list size of the card list is 98% of the interface size of the display interface.

In some embodiments of the present disclosure, the second preset condition includes: an input distance of the second input is greater than a second distance threshold.

In the embodiment of the present disclosure, whether the second content element in the second content card is to be pinned in the first display region is determined based on a numerical relationship between the input distance of the second input and the second distance threshold, so that the second content card is pinned in the specified region of the target display interface.

It should be noted that, in the case that the input distance of the second input is large, it is determined that the user has a strong desire to switch the display content card, and the first content card may be updated to display the second content card directly in response to the second input.

Exemplarily, a value range of the second distance threshold is 200 pt to 500 pt, for example, 390 pt.

In the embodiment of the present disclosure, by acquiring the input distance of the second input and comparing the input distance of the second input with the second distance threshold, it determines whether to perform the step of updating and displaying the second content card in the target display region, which allows the process of updating and displaying the target display interface to be more in line with the user's willingness to use.

In some embodiments of the present disclosure, the first content card is a preceding card of the second content card, and the second preset condition includes at least one of the following:
a first card height of the first content card is less than or equal to an interface height of the target display interface, and an input distance of the second input is greater than a second distance threshold; or
the first card height of the first content card is greater than the interface height of the target display interface, and a first display height of the second content card is greater than a first height threshold, where the first display height is a display height of the second content card in the target display interface after the second content card is moved in response to the second input.

In the embodiment of the present disclosure, the first content card is the preceding card of the second content card, that is, the second input is used to trigger the display of a subsequent card of the first content card. For example, a slot of the first content card in the data information flow is before a slot of the second content card, that is, when the display content is updated in the target display interface, the first content card is preferentially displayed, and after the display of the first content card is completed, the second content card is displayed.

In the embodiment of the present disclosure, when the first card height of the first content card currently displayed is less than or equal to the interface height of the target display interface, that is, the first content card may be completely displayed in the target display interface, if it is detected that the input distance of the second input is greater than a third distance threshold, it is determined that the user needs to browse the next content card at this time, so it is determined that the display content in the target display interface satisfies the second preset condition, and the update of the first content card and display of the second content card is performed.

Exemplarily, a value range of the third distance threshold is 80 dp to 130 dp, for example, 100 dp.

In the embodiment of the present disclosure, when the first card height of the first content card currently displayed is greater than the interface height of the target display interface, that is, when the first content card is displayed in the target display interface and no second input of the user is received, only part of the first content card is displayed in the target display interface. In response to the second input, an un-displayed part of the first content card needs to be updated and displayed first, and after the update and display of the un-displayed part of the first content card is completed, the second content card is updated and displayed in the target display interface. In the case that a second card height of the second content card updated and displayed in the target display interface is greater than the first height threshold, it is determined that the user needs to browse the next content card at this time. Thus, it is determined that the display content in the target display interface satisfies the second preset condition, and the update is performed to display the second content card.

Exemplarily, a value range of the first height threshold is 150 dp to 300 dp, for example, 200 dp.

In the embodiment of the present disclosure, the first card height of the first content card currently displayed is compared with the interface height of the target display interface. When the first card height is less than or equal to the interface height, it is determined that the user may browse the entire first content card in one go, and when the input distance of the second input is greater than the third distance threshold, the update is performed to display the second content card. When the first card height is greater than the interface height, the un-displayed part of the first content card needs to be updated and displayed first in response to the second input, and then when an exposed height of the second content card to be displayed subsequently is greater than the first height threshold, the update is performed to display the second content card, which improves the flexibility of switching and displaying the second content card, and also reduces the occurrence of switching and displaying the second content card before the first content card is completely browsed.

In some embodiments of the present disclosure, the interface display method further includes:
in a case that the first display height is less than or equal to the first height threshold and greater than a second height threshold, controlling the target display interface to display a first card region of the second content card, where a second display height of the first card region matches the second height threshold;
in a case that the first display height is less than or equal to the second height threshold, controlling the target display interface to keep current display content.

In the embodiment of the present disclosure, when the first display height of the second content card is less than or equal to the second height threshold, it is determined that the user does not need to update and display the second content card at this time. By comparing the numerical relationship between the first display height and the second height threshold, when the first display height is greater than the second height threshold, it is determined that the user desires to browse part of the second content card at this time, so part of the first content card and part of the second content card are displayed in the target display interface, where the first card region is a card region of the second content card displayed in the target display interface at this time, and the second display height of the first card region is the same as the second height threshold.

Exemplarily, a value range of the second height threshold is 80 dp to 120 dp, for example, 100 dp.

Exemplarily, when the first display height value is greater than 100 dp and less than or equal to 200 dp, the first card region of the second content card is displayed in the target display interface, and the second display height of the first card region is 100 dp, that is, the second content card bounces back to be exposed 100 dp in the target display interface.

In the embodiment of the present disclosure, when the first display height of the second content card is less than or equal to the second height threshold, it is determined that the user has little intention of browsing the second content card at this point, and then the second content card is controlled to keep the current display content, that is, the first content card and the second content card keep their current positions in the target display interface.

In the embodiment of the present disclosure, the content displayed in the target display interface is controlled according to the first display height of the second content card in the target display interface, which improves the flexibility of the content displayed when the target display interface is not updated to display the second content card, and improves the degree of matching between the display content and the user's intention.

In some embodiments of the present disclosure, the first content card is a subsequent card of the second content card;
the second preset condition includes: a third display height of the second content card is greater than a third height threshold, where the third display height is a display height of the second content card in the target display interface after the second content card is moved in response to the second input;
where in a case that the second card height of the second content card is less than the interface height of the target display interface, the third height threshold is associated with the second card height;
where in a case that the second card height is greater than or equal to the interface height of the target display interface, the third height threshold is associated with the interface height of the target display interface.

In the embodiment of the present disclosure, the first content card is the subsequent card of the second content card, that is, the second input is used to trigger display of the preceding card of the first content card. For example, the slot of the first content card in the data information flow is after the slot of the second content card, that is, when the display content is updated in the target display interface, the second content card is preferentially displayed, and after the display of the second content card is completed, the first content card is displayed.

In the embodiment of the present disclosure, the third display height is the display height of the second content card in the target display interface after the second content card is updated and displayed in response to the second input. When the third display height is greater than the third height threshold, it is determined that the user has a strong intention of updating and displaying to the second content card, and at this time, the second content element in the second content card is pinned in the first display region, so that the second content card is pinned in the specified region of the target display interface.

It should be noted that when the third display height is less than or equal to the third height threshold, the update is not performed and the second content card is not displayed.

Exemplarily, when the third display height is less than or equal to the third height threshold, the target display interface keeps the current display state, that is, the target display interface displays at least part of the first content card and part of the second content card.

Exemplarily, when the third display height is less than or equal to the third height threshold, the target display interface is restored to the display state before responding to the second input.

In the embodiment of the present disclosure, when the card height of the second content card is less than or equal to the interface height of the target display interface, the third height threshold is determined according to the second card height of the second content card.

Exemplarily, a value range of the third height threshold is 40% to 60% of the second display height of the second content card.

In the embodiment of the present disclosure, when the card height of the second content card is greater than the interface height of the target display interface, the third height threshold is determined according to the interface height of the target display interface.

Exemplarily, the value range of the third height threshold is 40% to 60% of the interface height of the target display interface.

In the embodiment of the present disclosure, in the case that the first content card is the subsequent card of the second content card, the third display height of the second content card in the target display interface in response to the second input is compared with the third height threshold, so as to determine whether to update to display the second content card. The third height threshold is set according to the interface height of the target display interface and/or the second card height of the second content card, which further ensures the flexibility of automatically updating and displaying the proceeding second content card.

In some embodiments of the present disclosure, the first display content matches a first sliding frame, so that display content of the first display content may be updated in the first update manner; the second display content matches a second sliding frame, so that display content of the second display content may be updated in the second update manner; where the second sliding frame is configured to be embedded in the first sliding frame.

In the embodiment of the present disclosure, in the process of constructing the display content that needs to be displayed in the target display interface, a first sliding frame and a second sliding frame are respectively built, and the first display content that needs to be updated and displayed according to the first update manner is configured as the first sliding frame, and the second display content that needs to be updated and displayed according to the second update manner is configured as the second sliding frame, so that the target display interface may update and display according to the first update manner when displaying the first display content, and the target display interface may update and display according to the second update manner when displaying the second display content.

In the embodiment of the present disclosure, by configuring the second sliding frame to be embedded in the first sliding frame, the switching between the first sliding frame and the second sliding frame may be smoother, that is, the switching between the first update manner and the second update manner is smoother.

In some embodiments of the present disclosure, the first sliding frame is configured to enable the first display content to be updated and displayed in the target display interface based on an input parameter of the first input;
the second sliding frame is configured to enable the second display content to be updated and displayed in the target display interface based on at least one of an input parameter of the second input, content position information, or content size information.

In the embodiment of the present disclosure, the first sliding frame may enable the first display content to be updated and displayed based on the input parameter of the first input, that is, an update progress of the first display content follows the first input.

Exemplarily, a moving direction of the first display content during the update and display matches an input direction of the first input, a moving distance of the first display content during the update and display matches an input distance of the first input, and a moving speed of the first display content during the update and display matches an input speed of the first input.

In the embodiment of the present disclosure, the second sliding frame may enable the second display content to be updated and displayed based on at least one of the input parameter of the second input, the content position information, or the content size information.

Exemplarily, after the second input is received, the input speed, the input direction, and the input size of the second input, and the content position information and the content size information of the second display content are acquired, so as to determine whether the condition for the update and display is satisfied, and when the condition for the update and display is satisfied, the updated second display content is directly displayed in the preset region of the target display interface, so that the user can update the second display content once through one input operation, for example, when the user swipes once, the current content card displayed at the preset position is updated and the next content card is displayed, thus achieving the effect of updating and displaying the content card once for one swipe.

In some embodiments of the present disclosure, the interface display method further includes: acquiring display position information in the target display interface;
updating and displaying the first display content in the first update manner in a case that the display position information matches the first display content;
updating and displaying the second display content in the second update manner in a case that the display position information matches the second display content.

In the embodiment of the present disclosure, by means of calculating the display content in the target display interface in real time, it is determined whether the current display position information matches the first display content or the second display content. In the case that it matches the first display content, the first display content is updated and displayed in the first update manner, and in the case that it matches the second display content, the second display content is updated and displayed in the second update manner.

In the embodiment of the present disclosure, the display position information corresponding to the target display interface in the overall display content is determined by means of real-time calculation, and the first display content and the second display content in the display content can be determined by the display position information, thus realizing updating the first display content in the first update manner and updating the second display content in the second update manner.

For the interface display method provided by the embodiment of the present disclosure, the execution body may be an interface display apparatus. In the embodiment of the present disclosure, the interface display apparatus provided by the embodiment of the present disclosure is described with reference to the case where the interface display apparatus executes the interface display method by way of example.

In some embodiments of the present disclosure, an interface display apparatus is provided. Fig. 9 shows a structural block diagram of an interface display apparatus provided by some embodiments of the present disclosure. As shown in Fig. 9, the interface display apparatus 900 includes:
a receiving module 902, configured to receive a first input via a target display interface;
a display module 904, configured to update display content in the target display interface in a first update manner in response to the first input;
the receiving module 902 is further configured to receive a second input via the target display interface in a case that the display content in the target display interface satisfies a first preset condition; and
the display module 904 is further configured to update the display content in the target display interface in a second update manner in response to the second input.

In the embodiment of the present disclosure, in the case that the display content in the target display interface does not satisfy the first preset condition, the user can trigger the display content in the target display interface to be updated and displayed in the first update manner through the first input, and in the case that the display content in the target display interface satisfies the first preset condition, the user can trigger the display content in the target display interface to be updated and displayed in the second update manner through the second input. In the case that the display content in the same target display interface is different, the update and display can be performed according to different update manners, thus improving the display effect and interaction efficiency when the user browses different display content.

In some embodiments of the present disclosure, the display module 904 is further configured to receive the second input via the target display interface in a case that first preset content in the target display interface is updated in the first update manner to display a first content element;
the display module 904 is further configured to update and display second preset content in the second update manner in response to the second input in a case that the second preset content is displayed in the target display interface.

In the embodiment of the present disclosure, when the target display interface updates and displays the first preset content in the first update manner and the first preset content is updated to the first content element in the first preset content, the first preset condition is satisfied; and when the second preset content is displayed, the update is performed according to the second update manner, so that the update manner can be automatically switched when the display content in the target display interface changes, thus allowing the user to browse different display content by different interaction manners.

In some embodiments of the present disclosure, the first preset content includes creation content and interaction detail information, and the first content element includes an element at a preset position in any of the creation content and the interaction detail information.

In the embodiment of the present disclosure, the first preset content including the creation content and the interaction detail information is updated in the first update manner, which can improve the browsing depth of the user to the creation content and the interaction detail information, and when the first preset content is updated to the first content element in the first update manner, the update manner is switched to the second update manner to update the display content, thus improving the fluency and accuracy of the switching process.

In some embodiments of the present disclosure, the display module 904 is further configured to update the display content in the target display interface based on an input parameter of the first input in response to the first input.

In the embodiment of the present disclosure, in the process of updating the display content in the target display interface in the first update manner, the display content is updated and displayed based on the input parameter of the first input, so that the user can flexibly control the current display content in the target display interface, and it is convenient for the user to browse the display content in the target display interface in detail.

In some embodiments of the present disclosure, the display module 904 is further configured to, in response to the second input, update a first content card in the target display interface to a second content card and display the second content card in response to the display content in the target display interface satisfying a second preset condition;
where a second content element in the second content card is displayed in a first display region of the target display interface.

In the embodiment of the present disclosure, when switching from the first content card to the second content card in the second update manner in the target display interface, if it is detected that the display content in the target display interface satisfies the second preset condition, the first content card is switched to the second content card, and the second content element in the second content card that is switched and displayed is displayed in the specified first display region, so that when the display content of the display interface is updated in the second update manner, the second content card newly displayed in the target display interface can be pinned at the specified position, thus facilitating the user to quickly switch the content card to be viewed, and facilitating the positioning of the new content card each time the content card is switched.

In some embodiments of the present disclosure, the second preset condition includes: at least part of content elements of the second content card are displayed in the target display interface;
the display module 904 is further configured to, in a case that all content elements of the first content card and at least part of content elements of the second content card are displayed in the target display interface, display the second content card in the target display interface and display the second content element in the first display region in response to the second input.

In the embodiment of the present disclosure, in the case that the first content card can be completely displayed in the target display interface, the second content card adjacent to the first content card is displayed in the target display interface together. When the complete first content card and part of the second content card are displayed in the target display interface, the second input of the user is received, and the second content card is directly pinned at the specified position, thus facilitating the user to quickly view the content in the second content card.

In some embodiments of the present disclosure, the second preset condition includes: at least part of content elements of the second content card are displayed in the target display interface;
the display module 904 is further configured to, in a case that part of content elements of the first content card are displayed in the target display interface, update the content elements of the first content card displayed in the target display interface in response to the second input;
the display module 904 is further configured to, in a case that remaining part of content elements of the first content card and at least part of content elements of the second content card are displayed in the target display interface, display the second content card in the target display interface and display the second content element in the first display region.

In the embodiment of the present disclosure, in the case that the first content card cannot be completely displayed in the target display interface, the first content card is updated and displayed in the target display interface in response to the second input of the user, and after the update and display of the first content card is completed and at least part of the second content card is displayed in the target display interface, the second content element in the second content card is automatically pinned in the first display region, so that the second content card is pinned in the specified region, and the target display interface can flexibly respond to the second input of the user to update and display the display content in the target display interface, thus ensuring that the user can switch to the next content card after browsing the current content card completely.

In some embodiments of the present disclosure, the second preset condition includes: a moving distance of the first content card is greater than a first distance threshold.

In the embodiment of the present disclosure, the second preset condition includes that the moving distance of the first content card in the target display interface is greater than the first distance threshold, that is, the user triggers the update and display of the first content card through the second input, and when the moving distance of the first content card exceeds the first distance threshold, the second content element in the second content card is pinned in the first display region, so that the second content card is pinned in the specified region of the target display interface.

In some embodiments of the present disclosure, the display module 904 is further configured to, in a case that at least part of the first content card is displayed in the target display interface, move the at least part of the first content card in a first direction in response to the second input;

the display module 904 is further configured to display the second content card in the target display interface and display the second content element in the first display region in a case that the moving distance of the first content card is greater than the first distance threshold.

In the embodiment of the present disclosure, whether the display content in the target display interface satisfies the second preset condition is determined according to the moving distance of the first content card in the target display interface, and when the moving distance is greater than the first distance threshold, the second content card is pinned in the target display interface by displaying the second content element of the second content card in the first display region.

In some embodiments of the present disclosure, the first distance threshold is associated with a list size of a content card list; and/or, the first distance threshold is associated with a card size of the second content card.

In the embodiment of the present disclosure, the first distance threshold is set according to the list size of the card list and/or the card size of the second content card, which may ensure the flexibility of automatically updating and displaying the second content card.

In some embodiments of the present disclosure, the list size matches an interface size of the target display interface.

In the embodiment of the present disclosure, by acquiring the input distance of the second input and comparing the input distance of the second input with the second distance threshold to determine whether to perform the step of updating and displaying the second content card in the target display region, it enables the target display interface to update and display more in line with the user's willingness to use.

In some embodiments of the present disclosure, the first content card is a preceding card of the second content card, and the second preset condition includes at least one of the following:
a first card height of the first content card is less than or equal to an interface height of the target display interface, and an input distance of the second input is greater than a second distance threshold; or
the first card height of the first content card is greater than the interface height of the target display interface, and a first display height of the second content card is greater than a first height threshold, where the first display height is a display height of the second content card in the target display interface after the second content card is moved in response to the second input.

In the embodiment of the present disclosure, the first card height of the first content card currently displayed is compared with the interface height of the target display interface. When the first card height is less than or equal to the interface height, it is determined that the user may browse the entire first content card in one go, and when the input distance of the second input is greater than the third distance threshold, the update is performed to display the second content card. When the first card height is greater than the interface height, the un-displayed part of the first content card needs to be updated and displayed first in response to the second input, and then, when an exposed height of the second content card to be displayed subsequently is greater than the first height threshold, the update is performed to display the second content card, which improves the flexibility of switching and displaying the second content card, and also reduces the occurrence of switching and displaying the second content card before the first content card is completely browsed.

In some embodiments of the present disclosure, the interface display apparatus 900 further includes:
a control module, configured to, in a case that the first display height is less than or equal to the first height threshold and greater than a second height threshold, control the target display interface to display a first card region in the second content card, where a second display height of the first card region matches the second height threshold;
the control module is further configured to control the target display interface to keep current display content in a case that the first display height is less than or equal to the second height threshold.

In the embodiment of the present disclosure, the content displayed in the target display interface is controlled according to the first display height of the second content card in the target display interface, which improves the flexibility of the content displayed when the target display interface is not updated to display the second content card, and improves the degree of matching between the display content and the user's wishes.

In some embodiments of the present disclosure, the first content card is a subsequent page of the second content card;
the second preset condition includes: a third display height of the second content card is greater than a third height threshold, where the third display height is a display height of the second content card in the target display interface after the second content card is moved in response to the second input;
where in a case that the second card height of the second content card is less than the interface height of the target display interface, the third height threshold is associated with the second card height;
in a case that the second card height is greater than or equal to the interface height of the target display interface, the third height threshold is associated with the interface height of the target display interface.

In the embodiment of the present disclosure, in the case that the first content card is the subsequent card of the second content card, the third display height of the second content card in the target display interface in response to the second input is compared with the third height threshold, so as to determine whether to update to display the second content card. The third height threshold is set according to the interface height of the target display interface and/or the second card height of the second content card, which further ensures the flexibility of automatically updating to display the preceding second content card.

In some embodiments of the present disclosure, the first display content matches a first sliding frame, so that display content of the first display content may be updated in the first update manner; the second display content matches a second sliding frame, so that display content of the second display content may be updated in the second update manner; where the second sliding frame is configured to be embedded in the first sliding frame.

In the embodiment of the present disclosure, by configuring the second sliding frame to be embedded in the first sliding frame, the switching between the first sliding frame and the second sliding frame may be smoother, that is, the switching between the first update manner and the second update manner is smoother.

In some embodiments of the present disclosure, the first sliding frame is configured to enable the first display content to be updated and displayed in the target display interface based on an input parameter of the first input;
the second sliding frame is configured to enable the second display content to be updated and displayed in the target display interface based on at least one of an input parameter of the second input, content position information, or content size information.

In the embodiment of the present disclosure, the first sliding frame may enable the first display content to be updated and displayed based on the input parameter of the first input, that is, an update progress of the first display content follows the first input.

In the embodiment of the present disclosure, the second sliding frame may enable the second display content to be updated and displayed based on at least one of the input parameter of the second input, the content position information, or the content size information.

In some embodiments of the present disclosure, the interface display apparatus 900 further includes:
an acquisition module, configured to acquire display position information in the target display interface;
the display module 904 is further configured to update and display the first display content in the first update manner in a case that the display position information matches the first display content;
the display module 904 is further configured to update and display the second display content in the second update manner in a case that the display position information matches the second display content.

In the embodiment of the present disclosure, the display position information corresponding to the target display interface in the overall display content is determined by means of real-time calculation, and the first display content and the second display content in the display content can be determined by the display position information, thus realizing updating the first display content in the first update manner and updating the second display content in the second update manner.

The interface display apparatus in the embodiment of the present disclosure may be an electronic device, or may be a component in the electronic device, such as an integrated circuit or a chip. The electronic device may be a terminal, or may be other devices other than the terminal. Exemplarily, the electronic device may be a mobile phone, a tablet computer, a notebook computer, a palmtop computer, a vehicle-mounted electronic device, a mobile Internet device (MID), an augmented reality (AR)/virtual reality (VR) device, a robot, a wearable device, an ultra-mobile personal computer (UMPC), a netbook, or a personal digital assistant (PDA), etc., and may also be a server, a network attached storage (NAS), a personal computer (PC), a television (TV), a teller machine, or a self-service machine, etc., which is not specifically limited in the embodiments of the present disclosure.

The interface display apparatus in the embodiment of the present disclosure may be an apparatus having an operating system. The operating system may be an Android operating system, an iOS operating system, or other possible operating systems, which is not specifically limited in the embodiments of the present disclosure.

The interface display apparatus provided by the embodiment of the present disclosure may implement various processes implemented by the above method embodiments, and to avoid repetition, details are not described herein again.

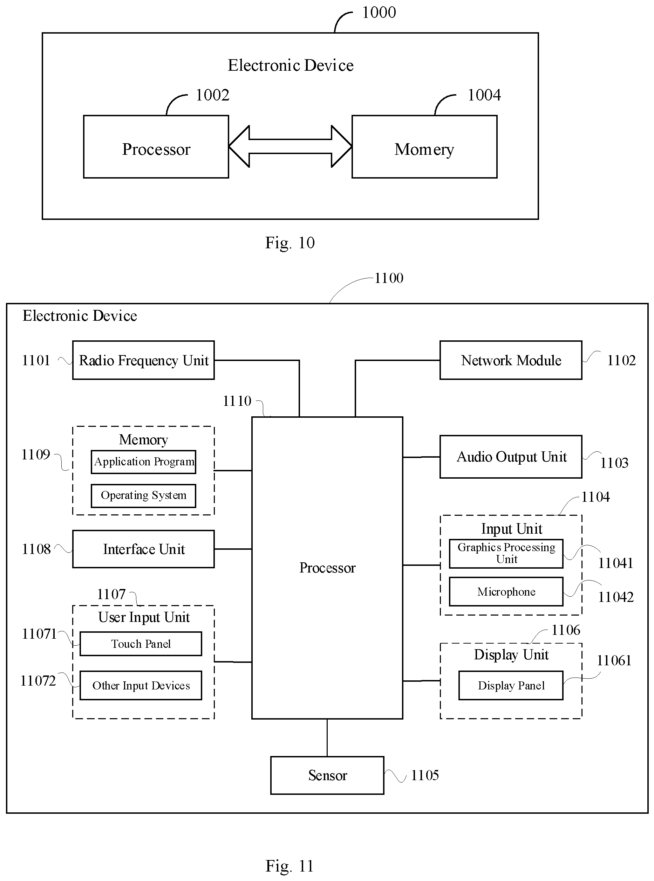

Optionally, an embodiment of the present disclosure further provides an electronic device, Fig. 10 shows a structural block diagram of an electronic device according to an embodiment of the present disclosure, and as shown in Fig. 10, the electronic device 1000 includes a processor 1002 and a memory 1004, the memory 1004 stores a program or an instruction executable on the processor 1002, and when the program or instruction is executed by the processor 1002, each step of the above method embodiment is implemented, and the same technical effect may be achieved, and to avoid repetition, details are not described herein again.

It should be noted that, the electronic device in the embodiment of the present disclosure includes the above-mentioned mobile electronic device and non-mobile electronic device.

Fig. 11 is a schematic diagram of a hardware structure of an electronic device for implementing an embodiment of the present disclosure.

The electronic device 1100 includes, but is not limited to: a radio frequency unit 1101, a network module 1102, an audio output unit 1103, an input unit 1104, a sensor 1105, a display unit 1106, a user input unit 1107, an interface unit 1108, a memory 1109, a processor 1110, and other components.

Those skilled in the art may understand that, the electronic device 1100 may further include a power source (such as a battery) for supplying power to each component, and the power source may be logically connected to the processor 1110 through a power management system, so as to implement functions such as charging and discharging management, and power consumption management through the power management system. The structure of the electronic device shown in Fig. 11 does not constitute a limitation on the electronic device, and the electronic device may include more or fewer components than those shown in the figure, or combine some components, or have different component arrangements, which will not be repeated here.

The user input unit 1107 is configured to receive a first input via a target display interface;
the display unit 1106 is configured to update and display the display content in the target display interface in a first update manner in response to the first input;
the user input unit 1107 is further configured to receive a second input via the target display interface in response to the display content in the target display interface satisfying a first preset condition;
the display unit 1106 is further configured to update and display the display content in the target display interface in a second update manner in response to the second input.

In the embodiment of the present disclosure, in the case that the display content in the target display interface does not satisfy the first preset condition, the user can trigger the display content in the target display interface to be updated and displayed in the first update manner through the first input, and in the case that the display content in the target display interface satisfies the first preset condition, the user can trigger the display content in the target display interface to be updated and displayed in the second update manner through the second input. In the case that the display content of the same target display interface is different, the update and display can be performed according to different update manners, thus improving the display effect and interaction efficiency when the user browses different display content.

In the embodiment disclosed in the present application, the display unit 1106 is further configured to receive the second input via the target display interface in a case that first preset content in the target display interface is updated to display a first content element in the first update manner;
the display unit 1106 is further configured to update and display second preset content in the second update manner in response to the second input in a case that the second preset content is displayed in the target display interface.

In the embodiment of the present disclosure, when the target display interface updates and displays the first preset content in the first update manner and the first preset content is updated to the first content element in the first preset content, the first preset condition is satisfied, and when the second preset content is displayed, the update is performed according to the second update manner, so that the update manner can be automatically switched when the display content in the target display interface changes, thus allowing the user to browse different display content by different interaction manners.

In the embodiment disclosed in the present application, the first preset content includes creation content and interaction detail information, and the first content element includes an element at a preset position in any of the creation content and the interaction detail information.

In the embodiment of the present disclosure, the first preset content including the creation content and the interaction detail information is updated in the first update manner, which can improve the browsing depth of the user to the creation content and the interaction detail information, and when the first preset content is updated to the first content element in the first update manner, the update manner is switched to the second update manner to update the display content, thus improving the fluency and accuracy of the switching process.

In the embodiment of the present disclosure, the display unit 1106 is further configured to update the display content in the target display interface based on an input parameter of the first input in response to the first input.

In the embodiment of the present disclosure, in the process of updating the display content in the target display interface in the first update manner, the display content is updated and displayed based on the input parameter of the first input, so that the user can flexibly control the current display content in the target display interface, and it is convenient for the user to browse the display content in the target display interface in detail.

In the embodiment of the present disclosure, the display unit 1106 is further configured to, in response to the second input, update a first content card in the target display interface to a second content card and display the second content card in response to the display content in the target display interface satisfying a second preset condition;
where a second content element in the second content card is displayed in a first display region of the target display interface.

In the embodiment of the present disclosure, when switching from the first content card to the second content card in the second update manner in the target display interface, if it is detected that the display content in the target display interface satisfies the second preset condition, the first content card is switched to the second content card, and the second content element in the second content card that is switched and displayed is displayed in the specified first display region, so that when the display content of the display interface is updated in the second update manner, the second content card newly displayed in the target display interface can be pinned at the specified position, thus facilitating the user to quickly switch the content card to be viewed, and facilitating the positioning of the new content card each time the content card is switched.

In the embodiment of the present disclosure, the second preset condition includes: at least part of content elements of the second content card are displayed in the target display interface;
the display unit 1106 is further configured to, in a case that all content elements of the first content card and at least part of content elements of the second content card are displayed in the target display interface, display the second content card in the target display interface and display the second content element in the first display region in response to the second input.

In the embodiment of the present disclosure, in the case that the first content card can be completely displayed in the target display interface, the second content card adjacent to the first content card is displayed in the target display interface together. When the complete first content card and part of the second content card are displayed in the target display interface, the second input of the user is received, and the second content card is directly pinned at the specified position, thus facilitating the user to quickly view the content in the second content card.

In the embodiment of the present disclosure, the second preset condition includes: at least part of content elements of the second content card are displayed in the target display interface;
the display unit 1106 is further configured to, in a case that part of content elements of the first content card are displayed in the target display interface, update the content elements of the first content card displayed in the target display interface in response to the second input;
the display unit 1106 is further configured to, in a case that remaining part of content elements of the first content card and at least part of content elements of the second content card are displayed in the target display interface, display the second content card in the target display interface and display the second content element in the first display region.

In the embodiment of the present disclosure, in the case that the first content card cannot be completely displayed in the target display interface, the first content card is updated and displayed in the target display interface in response to the second input of the user, and after the update and display of the first content card is completed and at least part of the second content card is displayed in the target display interface, the second content element in the second content card is automatically pinned in the first display region, so that the second content card is pinned in the specified region, and the target display interface can flexibly respond to the second input of the user to update and display the display content in the target display interface, thus ensuring that the user can switch to the next content card after browsing the current content card completely.

In the embodiment of the present disclosure, the second preset condition includes: a moving distance of the first content card is greater than a first distance threshold.

In the embodiment of the present disclosure, the second preset condition includes that the moving distance of the first content card in the target display interface is greater than the first distance threshold, that is, the user triggers the update and display of the first content card through the second input, and when the moving distance of the first content card exceeds the first distance threshold, the second content element in the second content card is pinned in the first display region, so that the second content card is pinned in the specified region of the target display interface.

In some embodiments of the present disclosure, the display unit 1106 is further configured to, in a case that at least part of the first content card is displayed in the target display interface, move the at least part of the first content card in a first direction in response to the second input;
the display unit 1106 is further configured to display the second content card in the target display interface and display the second content element in the first display region in a case that the moving distance of the first content card is greater than the first distance threshold.

In the embodiment of the present disclosure, whether the display content in the target display interface satisfies the second preset condition is determined according to the moving distance of the first content card in the target display interface, and when the moving distance is greater than the first distance threshold, the second content card is pinned in the target display interface by displaying the second content element of the second content card in the first display region.

In the embodiment of the present disclosure, the first distance threshold is associated with a list size of a content card list; and/or, the first distance threshold is associated with a card size of the second content card.

In the embodiment of the present disclosure, the first distance threshold is set according to the list size of the card list and/or the card size of the second content card, which may ensure the flexibility of automatically updating and displaying the second content card.

In the embodiment of the present disclosure, the list size matches an interface size of the target display interface.

In the embodiment of the present disclosure, by acquiring the input distance of the second input and comparing the input distance of the second input with the second distance threshold to determine whether to perform the step of updating and displaying the second content card in the target display region, the process of updating and displaying the target display interface may be more in line with the user's willingness to use.

In the embodiment of the present disclosure, the first content card is a preceding card of the second content card, and the second preset condition includes at least one of the following:
a first card height of the first content card is less than or equal to an interface height of the target display interface, and an input distance of the second input is greater than a second distance threshold; or
the first card height of the first content card is greater than the interface height of the target display interface, and a first display height of the second content card is greater than a first height threshold, where the first display height is a display height of the second content card in the target display interface after the second content card is moved in response to the second input.

In the embodiment of the present disclosure, the first card height of the first content card currently displayed is compared with the interface height of the target display interface. When the first card height is less than or equal to the interface height, it is determined that the user may browse the first content card in one go, and when the input distance of the second input is greater than a third distance threshold, the update is performed to display the second content card. When the first card height is greater than the interface height, the un-displayed part of the first content card needs to be updated and displayed first in response to the second input, and then, when an exposed height of the second content card to be displayed subsequently is greater than the first height threshold, the update is performed to display the second content card, which improves the flexibility of switching and displaying the second content card, and also reduces the occurrence of switching and displaying the second content card before the first content card is completely browsed.

In the embodiment of the present disclosure, the processor 1110 is configured to, in a case that the first display height is less than or equal to the first height threshold and greater than a second height threshold, control the target display interface to display a first card region in the second content card, where a second display height of the first card region matches the second height threshold;
the processor 1110 is further configured to control the target display interface to keep current display content in a case that the first display height is less than or equal to the second height threshold.

In the embodiment of the present disclosure, the content displayed in the target display interface is controlled according to the first display height of the second content card in the target display interface, which improves the flexibility of the content displayed when the target display interface is not updated to display the second content card, and improves the degree of matching between the display content and the user's wishes.

In the embodiment of the present disclosure, the first content card is a subsequent page of the second content card;
the second preset condition includes: a third display height of the second content card is greater than a third height threshold, where the third display height is a display height of the second content card in the target display interface after the second content card is moved in response to the second input;
where in a case that a second card height of the second content card is less than the interface height of the target display interface, the third height threshold is associated with the second card height; and
in a case that the second card height is greater than or equal to the interface height of the target display interface, the third height threshold is associated with the interface height of the target display interface.

In the embodiment of the present disclosure, in the case that the first content card is the subsequent card of the second content card, the third display height of the second content card in the target display interface in response to the second input is compared with the third height threshold, so as to determine whether to update to display the second content card. The third height threshold is set according to the interface height of the target display interface and/or the second card height of the second content card, which further ensures the flexibility of automatically updating to display the preceding second content card.

In the embodiment of the present disclosure, the first display content matches the first sliding frame, so that display content of the first display content may be updated in the first update manner; the second display content matches the second sliding frame, so that display content of the second display content may be updated in the second update manner; where the second sliding frame is configured to be embedded in the first sliding frame.

In the embodiment of the present disclosure, by configuring the second sliding frame to be embedded in the first sliding frame, the switching between the first sliding frame and the second sliding frame may satisfy the interaction requirements of different content.

In the embodiment of the present disclosure, the first sliding frame is configured to enable the first display content to be updated and displayed in the target display interface based on an input parameter of the first input;
the second sliding frame is configured to enable the second display content to be updated and displayed in the target display interface based on at least one of an input parameter of the second input, content position information, or content size information.

In the embodiment of the present disclosure, the first sliding frame may enable the first display content to be updated and displayed based on the input parameter of the first input, that is, an update progress of the first display content follows the first input.

In the embodiment of the present disclosure, the second sliding frame may enable the second display content to be updated and displayed based on at least one of the input parameter of the second input, the content position information, or the content size information.

In the embodiment of the present disclosure, the processor 1110 is further configured to acquire display position information in the target display interface;
the display unit 1106 is further configured to update and display the first display content in the first update manner in a case that the display position information matches the first display content;
the display unit 1106 is further configured to update and display the second display content in the second update manner in a case that the display position information matches the second display content.

In the embodiment of the present disclosure, the display position information corresponding to the target display interface in the overall display content is determined by means of real-time calculation, and the first display content and the second display content in the display content can be determined by the display position information, thus realizing updating the first display content in the first update manner and updating the second display content in the second update manner.

An embodiment of the present disclosure further provides a readable storage medium, the readable storage medium stores a program or an instruction, and when the program or instruction is executed by a processor, each process of the above embodiment of the interface display method is implemented, and the same technical effect may be achieved, and to avoid repetition, details are not described herein again.

It should be understood that, in the embodiment of the present disclosure, the input unit 1104 may include a graphics processing unit (GPU) 11041 and a microphone 11042, and the graphics processing unit 11041 processes image data of a still picture or a video obtained by an image capturing apparatus (such as a camera) in a video capturing mode or an image capturing mode. The display unit 1106 may include a display panel 11061, and the display panel 11061 may be configured in a form of a liquid crystal display, an organic light emitting diode, or the like. The user input unit 1107 includes at least one of a processor 11071 or other input devices 11072. The processor 11071 is also referred to as a touch screen. The processor 11071 may include two parts: a touch detection apparatus and a touch controller. Other input devices 11072 may include, but are not limited to, a physical keyboard, function buttons (such as a volume control button, a switch button, etc.), a trackball, a mouse, and a joystick, which will not be repeated here.

The memory 1109 may be used to store software programs and various data. The memory 1109 may mainly include a first storage region for storing programs or instructions and a second storage region for storing data, where the first storage region may store an operating system, an application program or instruction required by at least one function (such as a sound playback function, an image playback function, etc.), etc. In addition, the memory 1109 may include a volatile memory or a non-volatile memory, or the memory 1109 may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random-access memory (RAM), a static random-access memory (SRAM), a dynamic random-access memory (DRAM), a synchronous dynamic random-access memory (SDRAM), a double data rate synchronous dynamic random-access memory (DDRSDRAM), an enhanced synchronous dynamic random-access memory (ESDRAM), a synch link dynamic random-access memory (SLDRAM), and a direct rambus random-access memory (DRRAM). The memory 1109 in the embodiment of the present disclosure includes, but is not limited to, these and any other suitable types of memories.

The processor 1110 may include one or more processing units; optionally, the processor 1110 integrates an application processor and a modulation and demodulation processor, where the application processor mainly processes operations involving an operating system, a user interface, and an application program, etc., and the modulation and demodulation processor mainly processes wireless communication signals, such as a baseband processor. It should be understood that, the above modulation and demodulation processor may not be integrated into the processor 1110.

An embodiment of the present disclosure further provides a readable storage medium, the readable storage medium stores a program or an instruction, and when the program or instruction is executed by a processor, each process of the above embodiment of the interface display method is implemented, and the same technical effect may be achieved, and to avoid repetition, details are not described herein again.

The processor is a processor in the electronic device in the above embodiments. The readable storage medium includes a computer-readable storage medium, such as a computer read-only memory ROM, a random-access memory RAM, a magnetic disk or an optical disk, etc.

An embodiment of the present disclosure further provides a chip, which includes a processor and a communication interface, the communication interface is coupled with the processor, and the processor is configured to run a program or an instruction to implement each process of the above embodiment of the interface display method, and the same technical effect may be achieved, and to avoid repetition, details are not described herein again.

It should be understood that, the chip mentioned in the embodiment of the present disclosure may also be referred to as a system-level chip, a system chip, a chip system, or a system-on-chip (SoC), etc.

An embodiment of the present disclosure provides a computer program product, which is stored in a storage medium, and the program product is executed by at least one processor to implement each process of the above embodiment of the interface display method, and the same technical effect may be achieved, and to avoid repetition, details are not described herein again.

It should be noted that, in this paper, the terms "comprise/include", "contain" or any other variation thereof are intended to cover non-exclusive inclusion, so that a process, method, article or apparatus including a series of elements includes not only those elements, but also other elements not explicitly listed or elements inherent to such process, method, article or apparatus. Without further restrictions, an element defined by the phrase "includes/including a" does not exclude the presence of additional identical elements in the process, method, article or apparatus that includes the element. In addition, it should be pointed out that, the scope of the methods and apparatuses of the implementations of the present disclosure is not limited to performing functions in the order as shown or discussed, and may also include performing functions in a substantially simultaneous manner or in a reverse order according to the functions involved, for example, the described methods may be performed in an order different from that as described, and various steps may also be added, omitted, or combined. In addition, features described with reference to some examples may be combined in other examples.

Through the description of the above implementations, those skilled in the art may clearly understand that the method of the above embodiments may be implemented by means of software plus a necessary general hardware platform, and certainly may also be implemented by hardware, but in many cases the former is a better implementation. Based on such understanding, the technical solution of the present disclosure may be embodied in the form of a computer software product in essence or in a part that contributes to the prior art, the computer software product is stored in a storage medium (such as ROM/RAM, magnetic disk, optical disk), and includes several instructions for enabling a terminal (which may be a mobile phone, a computer, a server, or a network device, etc.) to execute the method of each embodiment of the present disclosure.

The embodiments of the present disclosure have been described above in conjunction with the drawings, but the present disclosure is not limited to the above specific implementations, the above specific implementations are only illustrative, rather than restrictive, and those of ordinary skill in the art may make many forms under the enlightenment of the present disclosure without departing from the spirit of the present disclosure and the scope of protection of the claims, all of which belong to the protection of the present disclosure.

## Claims

1. An interface display method, comprising:
receiving a first input via a target display interface;
updating and displaying display content in the target display interface in a first update manner in response to the first input;
receiving a second input via the target display interface in response to the display content in the target display interface satisfying a first preset condition; and
updating and displaying the display content in the target display interface in a second update manner in response to the second input.

2. The interface display method of claim 1, wherein the receiving a second input via the target display interface in response to the display content in the target display interface satisfying a first preset condition comprises:
receiving the second input via the target display interface in response to first preset content in the target display interface being updated in the first update manner to display a first content element; and
wherein the updating and displaying the display content in the target display interface in a second update manner in response to the second input comprises:
updating and displaying second preset content in the second update manner in response to the second preset content being displayed in the target display interface and in response to the second input.

3. The interface display method of claim 2, wherein the first preset content comprises creation content and interaction detail information, and the first content element comprises an element at a preset position in any of the creation content and the interaction detail information.

4. The interface display method of claim 1, wherein the updating and displaying display content in the target display interface in a first update manner in response to the first input comprises:
updating, in response to the first input, the display content in the target display interface based on an input parameter of the first input.

5. The interface display method of claim 1, wherein the updating and displaying the display content in the target display interface in a second update manner in response to the second input comprises:
updating a first content card in the target display interface to a second content card and displaying the second content card in response to the second input and in response to the display content in the target display interface satisfying a second preset condition,
wherein a second content element in the second content card is displayed in a first display region of the target display interface.

6. The interface display method of claim 5, wherein the second preset condition comprises: at least part of content elements of the second content card being displayed in the target display interface; and
wherein the updating a first content card in the target display interface to a second content card and displaying the second content card in response to the second input and in response to the display content in the target display interface satisfying a second preset condition comprises:
displaying the second content card in the target display interface and displaying the second content element in the first display region in response to all content elements of the first content card and at least part of content elements of the second content card being displayed in the target display interface and in response to the second input.

7. The interface display method of claim 5, wherein the second preset condition comprises: at least part of content elements of the second content card being displayed in the target display interface; and
wherein the updating a first content card in the target display interface to a second content card and displaying the second content card in response to the second input and in response to the display content in the target display interface satisfying a second preset condition comprises:
updating, in response to part of content elements of the first content card being displayed in the target display interface and in response to the second input, the part of content elements of the first content card displayed in the target display interface; and
displaying the second content card in the target display interface and displaying the second content element in the first display region in response to remaining part of content elements of the first content card and at least part of content elements of the second content card being displayed in the target display interface.

8. The interface display method of claim 5, wherein the second preset condition comprises: a moving distance of the first content card being greater than a first distance threshold.

9. The interface display method of claim 8, wherein the updating a first content card in the target display interface to a second content card and displaying the second content card in response to the second input and in response to the display content in the target display interface satisfying a second preset condition comprises:
in response to at least part of the first content card being displayed in the target display interface and in response to the second input, moving at least part of the first content card in a first direction; and
in response to the moving distance of the first content card being greater than the first distance threshold, displaying the second content card in the target display interface and displaying the second content element in the first display region.

10. The interface display method of claim 9, wherein the first distance threshold is associated with a list size of a content card list; and/or, the first distance threshold is associated with a card size of the second content card.

11. The interface display method of claim 10, wherein the list size matches an interface size of the target display interface.

12. The interface display method of claim 5, wherein the second preset condition comprises:
an input distance of the second input being greater than a second distance threshold.

13. The interface display method of claim 5, wherein the first content card is a preceding card of the second content card, and the second preset condition comprises at least one of the following:
a first card height of the first content card being less than or equal to an interface height of the target display interface, and an input distance of the second input being greater than a third distance threshold; or
the first card height of the first content card being greater than the interface height of the target display interface, and a first display height of the second content card being greater than a first height threshold, wherein the first display height is a display height of the second content card in the target display interface after the second content card is moved in response to the second input.

14. The interface display method of claim 13, further comprising:
controlling, in response to the first display height being less than or equal to the first height threshold and greater than a second height threshold, a first card region in the second content card to be displayed in the target display interface, wherein a second display height of the first card region matches the second height threshold; and
controlling, in response to the first display height being less than or equal to the second height threshold, current display content to remain displayed in the target display interface.

15. The interface display method of claim 5, wherein the first content card is a subsequent card of the second content card; and
wherein the second preset condition comprises: a third display height of the second content card being greater than a third height threshold, wherein the third display height is a display height of the second content card in the target display interface after the second content card is moved in response to the second input;
wherein the method further comprises:
associating, in response to a second card height of the second content card being less than the interface height of the target display interface, the third height threshold with the second card height; and
associating, in response to the second card height being greater than or equal to the interface height of the target display interface, the third height threshold with the interface height of the target display interface.

16. The interface display method of any one of claims 1 to 15, wherein first display content matches a first sliding frame, so that display content of the first display content is updatable in the first update manner;
wherein second display content matches a second sliding frame, so that display content of the second display content is updatable in the second update manner; and
wherein the second sliding frame is configured to be embedded in the first sliding frame.

17. The interface display method of claim 16, wherein the first sliding frame is configured such that the first display content is updated and displayed in the target display interface based on an input parameter of the first input; and
wherein the second sliding frame is configured such that the second display content is updated and displayed in the target display interface based on at least one of an input parameter of the second input, content position information, or content size information.

18. The interface display method of any one of claims 1 to 15, further comprising:
acquiring display position information in the target display interface;
updating and displaying first display content in the first update manner in response to the display position information matching the first display content; and
updating and displaying second display content in the second update manner in response to the display position information matching the second display content.

19. An interface display apparatus, comprising:
a receiving module, configured to receive a first input via a target display interface; and
a display module, configured to update and display, in response to the first input, display content in the target display interface in a first update manner;
wherein the receiving module is further configured to receive a second input via the target display interface in response to the display content in the target display interface satisfying a first preset condition; and
wherein the display module is further configured to update and display, in response to the second input, the display content in the target display interface in a second update manner.

20. An electronic device, comprising:
a processor and a memory, wherein the memory is configured to store a program or an instruction executable on the processor, and the program or instruction, upon executed by the processor, causes the processor to implement the steps of the method of any one of claims 1 to 18.

21. A non-transient readable storage medium, comprising a program or an instruction stored therein, wherein the program or instruction, upon executed by a processor, causes the processor to implement the steps of the method of any one of claims 1 to 18.
